Europäisches Patentamt

European Patent Office

Office européen des brevets

(19)

(11) Publication number: **0 313 255**
**A1**

## (12) EUROPEAN PATENT APPLICATION

(21) Application number: **88309515.0**

(22) Date of filing: **12.10.88**

(51) Int. Cl.4: **A01G 31/00 , C08J 9/00**

(30) Priority: **19.10.87 GB 8724475**

(43) Date of publication of application:
**26.04.89 Bulletin 89/17**

(84) Designated Contracting States:
**BE FR GB NL**

(71) Applicant: **EXXON CHEMICAL PATENTS INC.**
**1900 East Linden Avenue**
**Linden New Jersey 07036(US)**

(72) Inventor: **Roox, Guillaume Jozef**
**Baleisstraat 107 Box 1**
**B-2018 Antwerpen(BE)**
Inventor: **Daponte, Tony**
**Victor de la Montagnestraat No. 26/4**
**B-2050 Antwerpen(BE)**

(74) Representative: **Veldhuizen, Albert Dirk**
**Willem et al**
**Exxon Chemical Limited Exxon Chemical**
**Technology Centre PO Box 1**
**Abingdon Oxfordshire OX13 6BB(GB)**

(54) **Plant growth promotion and medium therefor.**

(57) A plant growth medium for promoting growth of seeds, seedlings, or roots is formed from a solid porous medium comprising an open cell foamed homo- or co-polymer of monomers selected from olefins, unsaturated monocarboxylic acid esters and unsaturated monocarboxylic acids (or ionomer derivatives).

EP 0 313 255 A1

## Plant growth promotion and medium therefor

This invention relates to a method of promoting plant growth, and to a foamed polymer useful as medium for such plant growth.

It has long been known that artificial structures such as glass wool, fabrics, and other materials may be used as a means for plant growth, for example germination of seeds. Particulate, closed cell materials have been added to soils to promote growth (see GB 1 376 091).

US 3 889 417 teaches the use of horticultural open-celled foam, optionally containing surfactant, biocide or nutrient, where the foam is prepared by reacting isocyanate capped polyoxyethylene polyol with water and the water contains seeds etc. There is no suggestion therein to employ polyolefin based foams in horticultural use.

US 3 812 619 provides essentially the same teaching as that described above, except that here the aqueous material which is used to react with the capped polyol contains humus, sand or vermiculite. Again, there is no teaching to use polyolefin foam.

DE 3 418 493 teaches the use of an open-celled HTS (high tensile strength) foam sheet as a component in a grass/sand support and drainage structure, but again with no mention of the use of the structure as a horticultural medium.

DD 233 046 teaches the production of hydrophylic foamed polyurethane by reacting isocyanate with polyether in the presence of catalyst, foaming agent and surfactant, where the surfactant is a polyethylene/oxypropylene dimethyl siloxane. The product has a uniform, fine cell structure with open pores, and can be used for medical or agricultural applications since it has good water absorption through improved hydrophylicity.

SU 260 309 discloses an artificial nutrient medium comprising a film of metal oxide impregnated black earth soil ash on a porous plastics substrate, but again no teaching of the use of polyolefin based foams.

SU 576 762 teaches the production of foamed polyurethane of improved capillarity and other properties, which is suitable for medical and agricultural use, by reacting isocyanate with a polyether of defined ethyleneoxide / propyleneoxide configuration and a specified proportion of terminal polyethylene blocks. Polyolefin based foams from no part of this publication.

JP 7 512 135.2, based on Japanes application 74-27408, discloses the production of urea-formaldehyde resin crumbs of small, uniform size which optionally include a non-ionic or anionic surfactant. The crumbs are produced by an aqeous phase reaction to yield a product which is useful as a horticultural medium, that is an artificial soil. There is no mention of polyolefin foam in this publication.

GB-A-2 163 419 discloses a horticultural nutrient product which comprises a foam of open-celled foamed plastics material. The plastics material is identified as polyurethane sheet or polyester sheet, and the nutrient is incorporated in the foam by impregnation with a waxy material which can slowly release nutrient from the foam. Although plastics foamed materials are mentioned in general, there is no specific disclosure of foam sheet formed from polyolefins.

Other documents discussing plant growth media are GB 2109362; GB 2104532; GB 1415630; GB 137609; GB 1296727 and GB 899936.

The above prior art references are in part concerned with synthetic growth media which are derived from organic sources. In large part the foam types are based on the use of polyurethane materials, which have been introduced into the agricultural and horticultural field as substitutes for the inorganic materials which have hitherto been used in this field. Others proposed substitutes are particulate materials not foam which are costly. Typically such inorganic materials are a form of "wool" formed from a rock base. If rock is melted to a lava at high temperature, and the liquid lava is caused to flow over a fast rotating wheel, this results in lava drops being hurled into the air at high speed and this transforms the drops into "rockwool" fibres.

Such fibres are then fixed into a stable structure, and such structures have for some time been employed, for example in the form of slabs or blocks or granulates, as a synthetic plant growth medium. Because of the fibrous nature of the rockwool, plant roots growing therein have the opportunity to move the fibres aside to force root growth therebetween; in other words the rockwool gives a good penetration effect for the roots. However a disadvantage of such rockwool is that it has little or no inherent resistance to applied stress, that is, it compresses when a force is applied. This force may be for example the increasing weight of a growing plant, and/or the weight of water or other nutrient which may be fed to the rockwool in order to promote plant growth. This tendency of the rockwool fibres to compress in use leads to two disadvantages. It reduces the availability of oxygen around the region of plant root growth; and it also means that the rockwool is not reusable. It will also be noted that because of the glasslike feature of the fibres, rockwool is difficult to handle without necessary protective clothing.

It is for the above reasons that the aforementioned organic-based synthetic growing media have been developed. However these are essentially based on the use of polyurethane, and although polyurethane foam has a fibular structure which provides a long narrow network of orifices useful for plant growth, polyurethane has a major disadvantage. It is a condensation product of an isocyanate and a polyol, and hence has phytotoxicity problems; the medium tends to kill the plant or to promote diseases thereon by virtue of its own inherent properties. The disadvantage with polyurethane foams also lies in the area of waste disposal. Thus the foam must either be dumped or burned, but both methods can lead to toxic material. Of course rockwool cannot be recovered or burned, and consequently can only be dumped after use.

In the agricultural/horticultural field, though, there is a desideratum for a synthetic plant growth medium which performs as well or better than the known rockwool or polyurethane foams, but without the inherent disadvantages associated therewith.

According to one aspect of the present invention there is provided a method of promoting plant growth which comprises disposing plant seeds, seedlings or roots in or on a solid, porous growth medium and supplying water, nutrient and oxygen thereto, characterized in that said solid, porous growth medium comprises an open cell foamed olefin homo-polymer or an olefin copolymer having comonomer(s) selected from (a) unsaturated monocarboxylic acid esters and (b) unsaturated monocarboxylic acids, those copolymers containing (b) as comonomer optionally being at least partially neutralized, or a foamed mixture of two or more of said homo- or copolymers.

Possible olefinic monomers include ethylene. Possible comonomers (a) include vinyl acetate, ethylacrylate, butylacrylate, methylacrylate and comonomers (b) include acrylic acid and methacrylic acid.

The term olefinic monomers is used herein to exclude unsaturated aromatic monomers such as styrene.

In a preferred embodiment, the foamed polymer comprises LDPE, EVA, EAA ionomer or a blend comprising two or more thereof. In a particularly preferred embodiment, the foamed polymer is formed from a base resin mixture of LDPE and up to 50 weight per cent, more preferably from 10 to 20 weight per cent, based on a total weight of the resin mixture, of a polar comonomer formed from (as monomers), component a) and one or more of b) and c). The use of mixtures of polymer resins in production of the foam employed in accordance with the invention, enables a better control of cell size in the foam, and hence a better control of its properties for plant growth use. For example a blend of LDPE and EAA ionomer gives and extremely uniform cell size distribution, which is valuable for enhancing consistent plant growth. Also, base blends which contain EAA ionomer exhibit an improved hygroscopicity, which has a big influence on water retention and capillarity of the foam. Thus in a particularly preferred embodiment, the resin mixture from which the foam is generated comprises LDPE and from 10 to 20 weight per cent of an EAA ionomer, which may employ any of the usual metal salts as crosslinking agents.

It has been found that a base resin or resin mixture particularly suitable for producing foams found to be useful in accordance with the present invention, has melt index of from 0.1 to 100 dg/min, more preferably from 2 to 5 dg/min, measured according to ASTM 1238-condition E.

Preferably the foam structure used as porous growth medium in accordance with the invention has a density of greater than 1. Otherwise, it has been found that in use, water and other liquid nutrients tend to drain through the cells of the foam, which may for example be in the form of a block in which the plant roots are growing, into the container which holds the block. If the foam density is less than one, then the growth medium begins to float on or in the aqueous medium in the container, and hence there is a phase boundary between the water in the bottom of the container and the region of the block in which the roots are growing. This can of course be extremely detrimental to plant growth, so accordingly the density of the foamed polymer is preferably greater than 1. This may be achieved by putting filler into the base polymer resin from which foam is produced, for example from 5 to 40 weight per cent filler, based on the total of filled polymer, and more preferably from 10 to 20 weight per cent filler. The filler may be for example silica or calcium carbonate, but preferably carbon black is incorporated, since in general plant roots like to grow in a dark environment.

As mentioned, the foamed polymer preferably has a specific density greater than one, and indeed the foamed polymer preferably has an apparent density of from 15 to 60 kg/m$^3$, more preferably 25 to 50 kg/m$^3$ and most preferably an apparent density of from 30 to 40 kg/m$^3$. The base resin compound density is preferably greater than 1.

The method of the invention may be put into practice by using the specified foamed polymer in the form of blocks. Thus in one embodiment a block which may be for example a cube of 10 cm edgelength has a hole formed in one surface thereof, into which is inserted a seed or seedling. In normal nursery conditions, water and nutrient are fed to the block through micro tubes enabling controlled dosage. In the nursery, the seedling roots grow through the open cell foam structure of the growth medium, under carefully controlled conditions, and at a certain point in the growth cycle, the cube may be transferred to a second growth stage. In this, the cube may be placed on or in another substrate of the foamed polymer material, which typically may be contained in a bag, for example, of polyethylene.

This second substrate is much larger than the 10 cm cube, and enables the roots to grow out of the cube and into the larger substrate format. Again water and nutrient is delivered to the cube and the larger substrate, and of course air will be available at the same time, thus promoting plant growth in a controlled environment.

It is an essential feature of the plant growth medium employed in accordance with the invention that the plant roots should readily be able to grow through the structure. The particular cell structure of the plant growth medium will depend to an extent on the nature of the plants which it is intended to grow in the structure. The foam will be of an open-cell type since these are effective for plant growth, consistent with sufficient capillary effect to retain water and nutrient within the foam. Preferably the cell size of the foam is from 0.5 to 5 mm, more preferably from 1 to 3 mm. In this context, by cell size there is meant the average diameter of the cell, assuming the cells to be spherical in shape. Preferably the cell sizes have a Gaussian distribution about the average. Cell size is important in the plant growth medium, since if it is too high, then the foam will not retain water and nutrient, whereas if it is too low then root penetration will be difficult, less oxygen will be stored in the cells and there will be a low penetration speed of the nutrient through the cells, meaning that oxygen may be lost and nutrient may not flow to all areas of the foam.

A measure of cell size and cell openness is the porosity of the foam, and this is preferably in the range 3 to 30 seconds, more preferably from 5 to 14 seconds and typically about 10 seconds. In this context, porosity means the length of time it takes for a 30 cm column of water, released onto a foam sheet of 5 cm thickness, to drain completely from the column into the foam. Again, porosity is important for plant growth reasons. If it takes too long for the column of water to flow through the foam, then the foam is not spongy enough; and if it flows through in too short a time, then this means that the nutrient will flow straight out of the foam and the roots will grow out of the bottom of the foam rather than being stabilised therein.

The readiness with which plant roots will grow within the growth medium depends amongst other things on how easily the roots can penetrate the cell walls. Clearly this will depend to an extent on the nature of the plant, but it has been found that foams which give a value of 10 to 20 mm, more preferably from 12 to 18 mm, for example about 15 mm, in a needle penetration test carried out in accordance with ASTM D5, are particularly suitable for use as plant growth media. The penetration is in part a reflection of the tensile strength of the foamed polymer cells, and indeed this tensile strength must be low enough to enable roots to force their way through the cell walls if necessary. Preferably the tensile strength is no more than 10 $N/m^2$, more preferably from 2 to 10 and especially preferably from 3 to 7, for example 5 $N/m^2$, as measured in accordance with DIN 53571. Associated with the root penetration facility is the elongation at break of the foam material, which in turn depends on the elasticity of the foam cell walls. If the cell walls are too elastic, then the roots cannot penetrate. Preferably an elongation at break of from 50 to 200 %, more preferably from 75 to 150 %, for example about 100 % is employed, as measured by DIN 53571.

The method according to the invention, as specified above, requires the use of an open cell foamed polymer. The polymer may be crosslinked or uncrosslinked or partially crosslinked, this being irrelevant for plant growth applications, provided the cell structure is acceptable. The desirable foam structure may be described as a collection of intercommunicating open cells, with only a relatively low proportion of closed cells being present in the foam. Preferably the open to closed cell ratio in the foam is at least 0.9, that is there are no more than 10 % of closed cells, preferably fewer than 5 % and most preferably fewer than 2 % of the cells in the structure are of a closed configuration.

It will be appreciated that the foam materials used in accordance with the present invention may be produced by any of the well known and understood foaming techniques, provided that such techniques produce the foam of specified cell types. In general, two types of foaming process are in common use, the first employs a chemical blowing agent in the compound, which chemical blowing agent is activated by heat on the compound.

The amount of the blowing agent incorporated, and its nature, coupled with the viscosity properties of the polymer, enables a control on the nature of the foam which is produced. Usually the chemical blowing agent method is not employed for low apparent density products.

An alternative method employs the injection of gas into the resin compound, which is mixed under an appropriate pressure. As soon as the pressure is released, the foam is formed, and again control of the foam cell properties may be secured by appropriate selection of pressures, temperatures and polymer viscosities. An open cell structure as required for foams useful in accordance with the present invention is best obtained by an explosive release of external pressure of a gas pressurized polymer melt, or by and explosive generation of external pressure within the melt. The nature of the cell structure is controlled by temperature and pressure conditions, and as mentioned, the foam forming techniques are well known and do not constitute a part of the present invention.

Methods for producing open-cell foam are described in EP 21458 and JP 59036141.

Generally, the expansion ratio from the starting polymer compound to the final foam is in the range of 6 to 40, and it has been found that foams which are particularly suited for use in accordance with the present invention are produced at an expansion ratio of from 25 to 35. In the case where a chemical blowing agent is employed to generate the foam, the blowing agent contents of up to 30 %, for example of fluorocarbon, are typically used.

The above discussed chemical blowing agent or gas injection techniques for producing foamed polymers, although not forming a part of the present invention, lead to a difference in the cell structures which are obtainable with base polymers as defined herein before, compared with those produced by the condensation of isocyanates and polyols in the production of the hitherto used polyurethane foams. Thus the condensation process for polyurethane generally leads to foams having a fibrillar network with holed in between. The fibre net is of relatively thick dimensions, and these make it relatively hard for roots to grow through the cell walls and break the fibres; they are thus relatively less effective as a plant growth medium.

The foam produced from a base polymer comprising a), b) or c) as defined above by the usual blowing technique, on the other hand gives a structure which may be considered as deriving from coalesced, exploded bubbles. The network which remains is similar to that of polyurethane, but in addition there is an extensive cell wall remnant area comprising the edges of what would have constituted the thin walls separating adjacent cells if such cells had remained intact. The presence of this extensive cell wall remnant area gives advantages over polyurethane, which advantages derive in large part from the use of surfactants in the polymers used in production of the foam. Thus in a preferred embodiment, the foamed polymer comprises a surfactant, preferably from 0.5 to 2 weight per cent of the surfactant, based on the total weight of the foam. More preferably the foam contains from 1.0 to 1.5 weight per cent of surfactant, which may be cationic, anionic or nonionic in nature. Such types of surfactant are employed to make the surface of the cells contained in the foam hydrophylic nature, and many such surfactants are known. It is preferred to use nonionic surfactants, since these generally avoid difficulties associated with phytotoxicity.

According to a second aspect of the present invention, there is provided a hydrophylic open cell olefin homo-polymer or an olefin having comonomer(s) selected from (a) unsaturated monocarboxylic acid esters and (b) unsaturated monocarboxylic acids, those copolymers containing (b) as comonomer optionally being at least partially neutralized, or a foamed mixture o two or more of said homo- or copolymers, which foamed homo- or copolymer includes a surfactant.

The surfactant may be of the type mentioned herejnabove, and again is preferably of the nonionic type, for example an alkyl phenol polyglycol ether, an alkyl polyglycol ether, a fatty amine polyglycol ether, a fatty acid polyglycol ester, ethoxylated castor oil, a polyalkylene glycol such polyethylene glycol or polypropylene glycol, or an alkylolamide. The polymer foam of the invention preferably comprises from 0.1 to 10 weight per cent surfactant based on the total weight of the foam, which preferably comprises LDPE and/or EVA and/or EAA ionomer.

It will be appreciated that the defined hydrophylic open cell foam is particularly useful as a plant growth medium in accordance with the method of the present invention. The presence of surfactants in the polymer foam promotes wettability thereof, which is valuable in the horticultural environment. To produce the hydrophylic foam, the base polymer is dosed with the appropriate surfactant, and after foaming, (in use) the surfactant migrates to the surface of the cells and promotes wetting with aqueous nutrient. The above mentioned thin cell wall remnant areas of the foam give a larger surface area than the fibre network structure which is typical for polyurethane based foams. This leads to a greater supply of surfactant, more rapidly, to the exposed areas within the foam, than is the case if only the fibre network is present, as is so with polyurethane. Moreover, surfactant contained within the thicker regions of cell wall in the open celled foams according to the invention, provides a reservoir for continuous slow migration of surfactant to the surface regions which are exposed to the aqueous nutrient. There is thus a continuous long term maintenance of good wettability of the foam.

With regard to wettability, reference may be made to rockwool, which typically has to be treated with a silane during production to give good wettability. Polyurethane foams as used in agricultural applications may also contain surfactant, but these do not have the large surface areas which lead to a quick release of the surfactant and hence consistently good wetting.

With the polymer foams and method according to the invention, it is thus particularly desirable that the foam should constitute at least 30 weight per cent of thin cell wall remnant areas, for promotion of this surface effect, more preferably at least 40 weight per cent of thin cell wall remnant areas.

In a preferred embodiment, the hydrophylic polymer foam according to the invention has a tensile strength of from 2 to 10 N/m$^2$ (DIN 53571); an elongation at break of from 50 to 200 per cent (DIN 53571); an apparent density of from 15 to 60 kg./m$^3$; a cell size of from 0.5 to 5 mm; a porosity of from 3 to 30 seconds; a penetration of from 10 to 20 mm (ASTM-D5); and contains no more than 5 % of closed cells.

In a particularly preferred embodiment of the invention, both the hydrophylic open cell polymer foam and the foam employed in accordance with the method of the invention have incorporated therein an effective amount of a plant nutrient and/or one or more phytosanitary substances. The plant nutrient may be for example a urea compound or a rooting stimulant; the phytosanitary substance may be any one of those conventionally used in horticultural applications, such as fungicides, pesticides, herbicides, etc. The proportion of these incorporated in the foam can be varied within wide ranges in dependence on the time period over which it is intended to grow the plant in the medium.

In a further preferred embodiment of the invention, the foamed polymer additionally includes a water swellable polymer in an amount effective substantially to improve water retention in use. Such effective amounts are preferably small proportions, since these give good water retention properties to the foam, but only limited compaction of the cells. Examples of water swellable polymers which may be employed in accordance with this embodiment include polyacrylimide and polypropene amide polymers.

**Claims**

1. A method of promoting plant growth which comprises disposing plant seeds, seedlings or roots in or on a solid, porous growth medium and supplying water, nutrient and oxygen thereto, characterized in that said solid, porous growth medium comprises an open cell foamed olefin homo-polymer or an olefin copolymer having comonomer(s) selected from (a) unsaturated monocarboxylic acid esters and (b) unsaturated monocarboxylic acids, those copolymers containing (b) as comonomer optionally being at least partially neutralized, or a foamed mixture of two or more of said homo- or copolymers.

2. A method according to claim 1 wherein the foamed polymer comprises LDPE, EVA, EAA ionomer or a blend comprising two or more thereof, preferably being from a base resin mixture of LDPE and up to 50 weight %, preferably from 10 to 20 weight %, based on the total weight of the resin mixture, of a polar copolymer formed from (a) and one or more of (b) and/or (c) and especially a resin mixture of LDPE and from 10 to 20 weight % of EAA ionomer.

3. A method according to claim or claim 2 wherein the foamed polymer comprises from 0.5 to 2 weight % of a surfactant, based on the total weight of foam and/or an effective amount of a plant nutrient and/or one or more phytosanitary substances.

4. A method according to any of the preceding claims wherein the foamed polymer includes from 5 to 40 weight % filler, based on the total weight of filled polymer and the foamed polymer has a specific density greater than 1.

5. A method according to any of the preceding claims wherein the foamed polymer has a tensile strength of from 2 to 10 N/m$^2$ (DIN 53571); an elongation at break of from 50 to 200 % (DIN 53571); and/or has a penetration value of from 10 to 20 mm (ASTM-D5).

6 A method according to any of the preceding claims in which the foamed polymer has an apparent density of from 15 to 60 kg/m$^3$ and a cell size (as herein before defined) of from 0.5 to 5 mm, the cell size preferably being from 1 to 3 mm.

7 A method according to any of the preceding claims in which the foamed polymer has a porosity (as hereinbefore defined) of from 3 to 30 seconds, preferably from 5 to 15 seconds.

8 A method according to any of the preceding claims wherein the foamed polymer contains no more than 10 % of cells which are closed, preferably fewer than 2 % of closed cells; and/or wherein at least 30 weight % of the foam is constituted by thin cell wall remnant area.

9 A method according to any of the preceding claims wherein the foamed polymer additionally includes a water swellable polymer in an amount effective substantially to improve water retention in use, said water swellable polymer preferably comprising a polyacrylamide or polypropeneamide.

10. A hydrophylic open cell olefin homo-polymer or an olefin having comonomer(s) selected from (a) unsaturated monocarboxylic acid esters and (b) unsaturated monocarboxylic acids, those copolymers containing (b) as comonomer optionally being at least partially neutralized, or a foamed mixture of two or more of said homo- or copolymers, which foamed homo- or copolymer includes a surfactant.

11. A foam according to claim 10 wherein the surfactant is present in an amount of from 0.1 to 10 wt %; and/or is non-ionic and preferably an alkyl phenol polyglycol ether, an alkyl polyglycol ether, a (fatty) amine polyglycol ether, a fatty acid polyglycol ester, ethoxylated castor oil, a polyalkylene glycol, or an alkylamide.

12. A foam according to claim 10 or 11 which has a tensile strength of from 2 to 10 $N/m^2$ (DIN 53571); an elongation at break of from 50 to 200 % (DIN 53571); an apparent density of from 15 to 60 $kg/m^3$; a cell size (as hereinbefore defined) of from 0.5 to 5 mm; a porosity (as hereinbefore defined) of from 3 to 30 seconds; a penetration of from 10 to 20 mm (ASTM-D5); and containing no more than 5 % of closed cells and at least 30 weigth % of thin cell wall remnant areas.

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | DE-B-2513686 (HARTMEYER)<br>* claims 1-3 *<br>--- | 1 | A01G31/00<br>C08J9/00 |
| Y | US-A-3257754 (OHSOL)<br>* column 1, line 58 - column 2, line 44 *<br>* column 3, line 38 - line 40 *<br>* column 4, line 10 - line 17 *<br>--- | 1-4,9-10 | |
| Y | US-A-3973355 (MCKENZIE)<br>* column 5, line 10 - line 33 *<br>* column 11, line 16 - column 13, line 14 *<br>--- | 1-3,9-10 | |
| Y | GB-A-2080083 (SMITH AND NEPHEW)<br>* page 1, line 51 - line 62 * | 4 | |
| A | | 6,12 | |
| | ----- | | |

TECHNICAL FIELDS SEARCHED (Int. Cl.4 )

A01G
A01C

The present search report has been drawn up for all claims

| Place of search | Date of completion of the search | Examiner |
|---|---|---|
| THE HAGUE | 17 JANUARY 1989 | HERYGERS J.J. |

EPO FORM 1503 03.82 (P0401)